# EUROPEAN PATENT SPECIFICATION

(11) **EP 1 524 495 B1**
(45) Date of publication and mention of the grant of the patent: **10.09.2014**
(21) Application number: 04023999.8
(22) Date of filing: 08.10.2004
(51) Int. Cl.: G01C 15/00, H01S 5/022, G01S 5/16

(54) **Laser irradiating system**
Laserbeleuchtungssystem
Système d'illumination par laser

(30) Priority: 14.10.2003 JP 2003353824
(43) Date of publication of application: 20.04.2005
(73) Proprietor: Kabushiki Kaisha TOPCON, Tokyo-to (JP)
(72) Inventor: Hayase, Shin-ichi, Itabashi-ku, Tokyo-to (JP); Osaragi, Kazuki, Itabashi-ku, Tokyo-to (JP); Fukuroda, Yuji, Itabashi-ku, Tokyo-to (JP)
(74) Representative: Louis Pöhlau Lohrentz

(56) References cited:
- EP-A- 0 442 193
- EP-A- 0 518 572
- EP-A- 1 024 343
- US-A1- 2003 137 658
- US-B1- 6 486 955

## Description

### BACKGROUND OF THE INVENTION

The present invention relates to a laser irradiating system for forming a reference line and a reference plane in construction work or in room interior finishing work. In particular, the invention relates to a laser irradiating system using a rod lens and used for irradiating a laser beam in fan-like shape.

As a laser projecting system for forming a reference plane by using a laser beam, the system described in JP-A-7-218261 is known. Referring to Fig. 12, description will be given now on this laser projecting system.

This laser projecting system comprises a projecting system main unit 1 and a leveling unit 2. In the projecting system main unit 1, there are provided a laser diode 3 for emitting a visible laser beam in a vertical direction, and a rotating tube 4 rotatable around an optical axis of the laser beam, and the rotating tube 4 is rotated by a motor 5. A pentagonal mirror 6 is disposed on the rotating tube 4, and the laser beam is deflected in a horizontal direction.

The projecting system main unit 1 is leveled in a horizontal position by the leveling unit 2. By rotating the rotating tube 4 while the laser beam is emitted from the laser diode 3, a horizontal reference plane is formed by the laser beam.

In the laser projecting system as described above, the laser beam is rotated, and it is disadvantageous in that the irradiated laser beam has low brightness and poor visibility. Also, a vertical line is needed for marking operation. In the laser projecting system as described above, there has been such problem that only a horizontal reference plane and a horizontal reference line can be formed, and it is not possible to form a vertical reference plane and a vertical reference line.

As a system for forming a reference plane and a reference line by using a laser beam, the laser system for marking as described in JP-A-8-271252 is known. Referring to Fig. 13, the laser system for marking will be described below.

A support member 8 is suspended from a horizontal frame 7 just like a weight. A laser projector 9 is mounted on the support member 8, and the laser projector 9 comprises a laser diode (not shown) and a rod lens 11, which perpendicularly crosses a center line of the horizontal frame 7. A laser beam emitted from the laser diode is diffused in a vertical direction and is irradiated when the laser beam passes through the rod lens 11, and a reference line is formed on a wall surface or a floor surface.

By the laser system for marking as described above, a vertical reference plane and a vertical reference line can be formed, while it is not possible to form a horizontal reference plane and a horizontal reference line. Naturally, it is not possible to form two vertical reference planes perpendicularly crossing each other. By the laser system for marking as described above, a continuous projection line is formed at a time on four surfaces, i.e. two side wall surfaces, a ceiling surface, and a floor surface. As a result, brightness is decreased and visibility is poor.

US 2003/0137658 A1 discloses a construction machine control system that enables a single rotary laser apparatus to control more than one construction machine. The subject-matter of US 2003/0137658 A1 provides to project lined laser beams by rotary irradiation and to form a reference plane in total circumferential direction.

EP 0 422 193 A2 discloses an orthogonal light plane generator associated with a primary light plane generator to convert a portion of a first light plane projected by the primary light plane generator into a second light plane substantially orthogonal to the first light plane. The orthogonal light plane generator comprises a diverter which defines three or more reflecting surfaces for receiving a portion of the first light plane and redirecting that portion as the second light plane.

### SUMMARY OF THE INVENTION

It is an object of the present invention is to provide a system, which can form at the same time a horizontal reference plane, a horizontal reference line, a vertical reference plane, a vertical reference line, and two vertical reference planes and two vertical reference lines perpendicularly crossing each other, and which can improve visibility of the reference plane and the reference line thus formed.

The object of the present invention is obtained with the laser irradiating system according to claim 1.

To attain the above object, the laser irradiating system according to the present invention which comprises a leveling unit and a main unit provided on the leveling unit and which forms a reference plane by the laser beam being irradiated from the main unit, wherein the main unit comprises a rotating unit for accommodating an irradiation optical system, a first light emitting unit for emitting a first laser beam to a center of rotation of the rotating unit, and a second light emitting unit for irradiating a second laser beam of fan-like shape with spreading in parallel to an optical axis of the first light emitting unit, wherein the irradiation optical system irradiates the first laser beam from the first emitting unit by deflecting toward a perpendicular direction and forms a first reference plane, and the second laser beam irradiated from the second light emitting unit forms a second reference plane, which perpendicularly crosses the first reference plane.

Also, the present invention provides the laser irradiating system as described above, wherein the leveling unit is provided on a base having installation surfaces crossing perpendicularly to each other, and the leveling unit is mounted on one of the installation surfaces of the base. Further, the present invention provides the laser irradiating system as described above, wherein the main unit is tiltably supported in any direction as desired, the main unit comprises a tilt detecting unit for detecting tilting in two horizontal directions, the leveling unit comprises two sets of leveling subunits capable to tilt the main unit in two directions independently, and the two sets of leveling subunits are driven based on result of detection by the tilt detecting unit. Also, the present invention provides the laser irradiating system as described above, wherein the main unit is tiltably supported in any direction as desired by a spherical bearing, the main unit comprises a tilt detecting unit for detecting tilting in three directions perpendicularly crossing each other, the leveling unit comprises two sets of leveling subunits capable to tilt the main unit independently in two directions and a rolling compensation unit for rotating the main unit around the spherical bearing, and the two sets of leveling subunits and the rolling compensation unit are driven based on result of detection by the tilt detecting unit. Further, the present invention provides the laser irradiating system as described above, wherein the first light emitting unit has a rod lens disposed concentrically on the center of rotation of the rotating unit, and the irradiation optical system comprises a corner cube prism for reflecting the first laser beam passing through the rod lens in parallel direction and a pentagonal prism for deflecting a reflection light from the corner cube prism at a right angle and for allowing the light to enter the rod lens from a perpendicular direction, wherein the irradiated first laser beam is a light beam in fan-like shape with horizontal spreading. Also, the present invention provides the laser irradiating system as described above, wherein the irradiation optical system comprises a pentagonal prism disposed on the center of rotation of the rotating unit, and the laser beam deflected by the pentagonal prism is projected for scanning and a reference plane is formed when the rotating unit is rotated. Further, the present invention provides the laser irradiating system as described above, wherein the main unit comprises a third light emitting unit having an optical axis tilted with respect to the second light emitting unit, and the third light emitting unit irradiates a third laser beam in fan-like shape, wherein the third laser beam has spreading in the same direction as the second laser beam and is irradiated in the same plane as the second laser beam. Also, the present invention provides the laser irradiating system as described above, wherein an optical axis of the second light emitting unit is tilted with respect to the first reference plane formed by the first laser beam. Further, the present invention provides the laser irradiating system as described above, wherein color of the first light emitting unit is different from color of the second laser beam. Also, the present invention provides the laser irradiating system as described above, wherein the second light emitting unit irradiates a second laser beam in fan-like shape via a rod lens. Further, the present invention provides the laser irradiating system as described above, wherein the third light emitting unit irradiates a third laser beam in fan-like shape via a rod lens. Also, the present invention provides the laser irradiating system as described above, wherein the main unit has a body tube for accommodating the first light emitting unit, and the rotating unit is rotatably mounted on the body tube. Further, the present invention provides the laser irradiating system as described above, wherein there are provided a motor for rotating the rotating unit and a signal light receiving unit, and the motor is driven based on a photodetection signal from the signal light receiving unit.

According to the present invention, in the laser irradiating system which comprises a leveling unit and a main unit provided on the leveling unit and which forms a reference plane by the laser beam being irradiated fom the main unit, the main unit comprises a rotating unit for accommodating an irradiation optical system, a first light emitting unit for emitting a first laser beam to a center of rotation of the rotating unit, and a second light emitting unit for irradiating a second laser beam of fan-like shape having spreading in parallel to an optical axis of the first light emitting unit, and the irradiation optical system irradiates the first laser beam from the first light emitting unit by deflecting toward a perpendicular direction and forms a first reference plane, and the second laser beam irradiated from the second light emitting unit forms the second reference plane, which perpendicularly crosses the first reference plane. As a result, the system can be used at two positions. The work requiring a horizontal reference plane and the work requiring a vertical reference plane can be carried out at the same time, and this contributes to the improvement of working efficiency.

According to the present invention, the main unit is supported by a spherical bearing. This makes it possible to tilt the main unit in the horizontal direction and to perform rolling of the main unit. The main unit comprises a tilt detecting unit for detecting tilting in three directions crossing perpendicularly each other, the leveling unit comprises two sets of leveling subunits capable to tilt the main unit independently in two directions and a rolling compensation unit for rotating the main unit around the spherical bearing, and the two sets of leveling subunits and the rolling compensation unit are driven based on result of detection by the tilt detecting unit. As a result, the system can be used in two positions, i.e. in erected state and in horizontally laid state. Automatic leveling operation can be achieved at each of these positions. Because the main unit is mechanically fixed on the leveling unit, the optical system is not brought to unstable condition even when the laser projecting system is moved or transported. This eliminates the possibility of damage during transport or handling.

According to the present invention, the first light emitting unit has a rod lens disposed concentrically on the center of rotation of the rotating unit, the irradiation optical system comprises a corner cube prism for reflecting the first laser beam passing through the rod lens in parallel direction and a pentagonal prism for deflecting a reflection light from the corner cube prism at a right angle and for allowing the light to enter the rod lens from a perpendicular direction, and the irradiated first laser beam is a light beam in fan-like shape with horizontal spreading. As a result, a reference plane and a reference line with high brightness can be formed in the range required for operation, and the projecting direction of the laser beam can be changed to match the change of the working position.

According to the present invention, the main unit comprises a third light emitting unit having an optical axis tilted with respect to the second light emitting unit, and the third light emitting unit projects a third laser beam in fan-like shape, and the third laser beam has spreading in the same direction as the second laser beam and is projected in the same plane as the second laser beam. As a result, a reference plane and a reference line with high brightness and good visibility can be formed for a wide range by the second light emitting unit and the third light emitting unit.

According to the present invention, color of the first light emitting unit is different from color of the second laser beam. This makes it easier to discriminate a plurality of reference planes and reference lines from each other, and this contributes to the improvement of working efficiency.

According to the present invention, there are provided a motor for rotating the rotating unit and a signal light receiving unit, and the motor is driven based on a photodetection signal from the signal light receiving unit. This makes it possible to perform remote control operation, and the working efficiency can be improved.

### BRIEF DESCRIPTION OF THE DRAWINGS

Fig. 1 is a sectional elevation view of a first embodiment of the present invention;
Fig. 2 is an arrow diagram along a line A-A in Fig. 1;
Fig. 3 is an arrow diagram along a line B-B in Fig. 1;

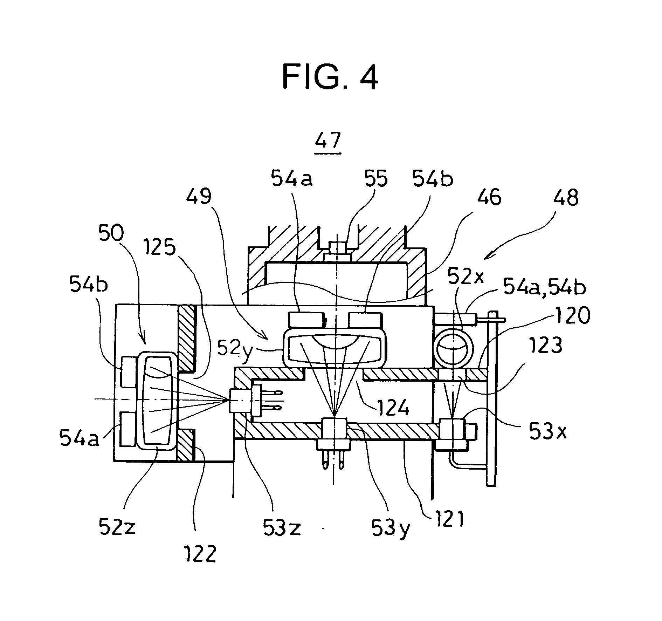

Fig. 4 is an enlarged view of a tilt detecting system;
Fig. 5 is a drawing to explain a remote controller;
Fig. 6 represents drawings, each used for explaining operating condition of the first embodiment. Fig. 6 (A) shows the laser irradiating system in erected state, and Fig. 6 (B) shows the laser irradiating system when the laser irradiating system is laid horizontally;
Fig. 7 is a sectional elevation view of the first embodiment when the laser irradiating system is laid at horizontal position;
Fig. 8 (A) and Fig. 8 (B) each represents a drawing to show operation of the tilt detecting system in the first embodiment;
Fig. 9 is a partial sectional elevation view of a second embodiment of the invention;
Fig. 10 is a sectional elevation view of a third embodiment of the invention when it is laid at horizontal position;
Fig. 11 is a sectional elevation view of a fourth embodiment of the invention when it is laid at horizontal position;

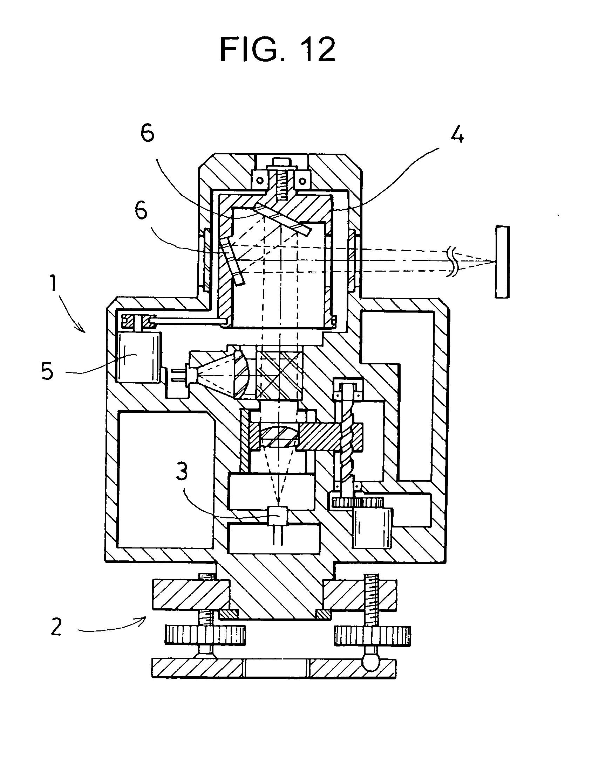

Fig. 12 is a drawing to explain a conventional example; and

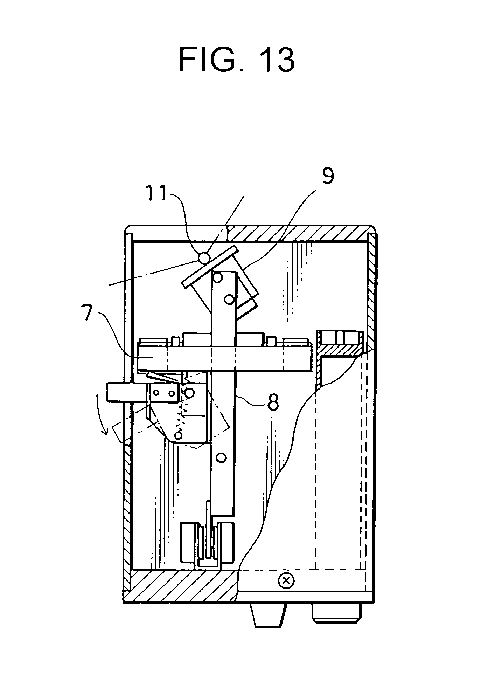

Fig. 13 is a drawing to show another type of conventional example.

### DETAILED DESCRIPTION OF THE PREFERRED EMBODIMENTS

Detailed description will be given below on the best mode for carrying out the present invention referring to the drawings.

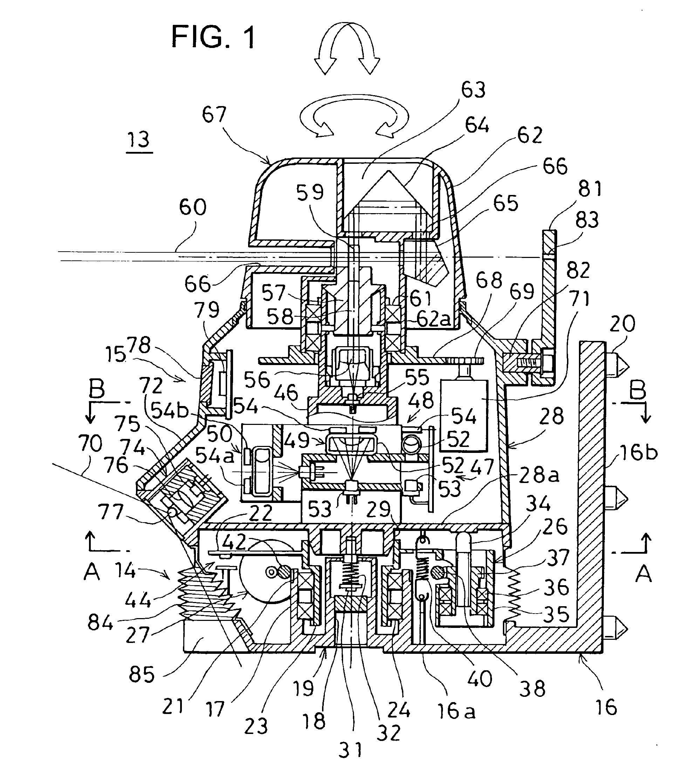

Fig. 1 to Fig. 3 each represents a laser irradiating system according to a first embodiment of the present invention.

A laser irradiating system 13 primarily comprises a leveling unit 14 and a main unit 15.

First, description will be given on the leveling unit 14.

A base 16 which is designed in approximately L-shaped form has a horizontal base plate 16a and a vertical base plate 16b which crosses perpendicularly to the horizontal base plate 16a. At about the center of the horizontal base plate 16a, a shaft support unit 19 in dual cylindrical shape and comprising an outer tube 17 and an inner tube 18 protruding upward is installed. A gear 21 is provided on an upper outer periphery of the outer tube 17, and an upper end of the inner tube 18 is closed. Three legs 20 are protruded from the vertical base plate 16b. When the laser irradiating system 13 standing at erected state as shown in Fig. 1 is laid down by an angle of 90°, the laser irradiating system 13 is supported via these three legs 20.

A leveling base plate 22 is arranged concentrically with the shaft support unit 19. At the center of the leveling base plate 22, a hollow rotation shaft 23 protruding downward is installed. The hollow rotation shaft 23 is rotatably engaged with the outer tube 17 via a bearing 24. An X-axis leveling unit 25 and a Y-axis leveling unit 26 are disposed along two radii of the leveling base plate 22 running perpendicularly to each other. A rolling compensation unit 27 is provided on a portion of the leveling base plate 22 not interfering with the X-axis leveling unit 25 and the Y-axis leveling unit 26.

The main unit 15 comprises a casing 28. On a lower surface of a bottom plate 28a of the casing 28, a spherical shaft 29 is protruded. The spherical shaft 29 is engaged with an upper end of the leveling base plate 22. The upper end of the leveling base plate 22 and the spherical shaft 29 make up together a spherical bearing unit, and the bottom plate 28a can be freely tilted in any direction as desired. A screw 31 penetrating the upper end of the inner tube 18 is screwed into the spherical shaft 29. A compression spring 32 is interposed between a head of the screw 31 and the upper end of the inner tube 18 so that the spherical shaft 29 is closely fitted to the upper end of the leveling base plate 22.

The X-axis leveling unit 25 comprises an X-axis rod 33, and the Y-axis leveling unit 26 comprises a Y-axis rod 34. Each of the X-axis rod 33 and Y-axis rod 34 extends in a vertical direction. The X-axis rod 33 and the Y-axis rod 34 are abutted to a bottom surface of the bottom plate 28a. The bottom plate 28a is supported at three points, i.e. the upper end of the leveling base plate 22, the X-axis rod 33, and the Y-axis rod 34. A spring 40 is stretched from an intermediate position between the X-axis leveling unit 25 and the Y-axis leveling unit 26 to the horizontal base plate 16a, and the bottom plate 28a is pressed against the X-axis rod 33 and the Y-axis rod 34.

Because the X-axis leveling unit 25 has the same structure as the Y-axis leveling unit 26, description will be given here only on the Y-axis leveling unit 26.

A holder unit 35 in cylindrical shape is provided vertically on the leveling base plate 22. In the holder unit 35, a worm wheel 37 is rotatably accommodated via a bearing 36. On a lower surface of the leveling base plate 22, a worm gear 38 is rotatably provided. The worm gear 38 is engaged with the worm wheel 37, and the Y-axis rod 34 is screwed into the center of the worm wheel 37. Although not shown in the figure, the Y-axis rod 34 is freely movable in an up-to-bottom direction while the Y-axis rod 34 is restrained from rotating. When the worm wheel 37 is rotated, the Y-axis rod 34 is displaced in a vertical direction.

An X-axis leveling motor 39 and a Y-axis leveling motor 41 are arranged on the leveling base plate 22, and an output shaft of the Y-axis leveling motor 41 is coupled with the worm gear 38 of the Y-axis leveling unit 26 by gear coupling. Similarly, an output shaft of the X-axis leveling motor 39 is coupled with a worm gear 38 of the X-axis leveling unit 25 by gear coupling.

Now, description will be given on the rolling compensation unit 27.

A worm gear 42 is rotatably disposed on a bottom surface of the leveling base plate 22, and a rolling compensation motor 43 is provided. An output shaft of the rolling compensation motor 43 is coupled with the worm gear 42 by gear coupling, and the worm gear 42 is engaged with the gear 21 of the outer tube 17. When the rolling compensation motor 43 is driven, the rolling compensation motor 43 is rotated around the outer tube 17. Further, the leveling base plate 22 is rotated, and the casing 28 is rotated integrally with the leveling base plate 22.

The driving of each of the X-axis leveling motor 39, the Y-axis leveling motor 41, and the rolling compensation motor 43 is controlled by a control unit 45 based on the results of tilting detected by an X-axis tilt detector 48, a Y-axis tilt detector 49, and a Z-axis tilt detector 50 respectively (to be described later).

A rotation amount limiting sensor 44 for limiting an amount of rotation of the leveling base plate 22 is disposed between the leveling base plate 22 and the horizontal base plate 16a. The rotation amount limiting sensor 44 detects the amount of rotation of the leveling base plate 22. When the amount of rotation from a standard position exceeds the allowable value, rotation of the rolling compensation unit 27 is stopped.

Now, description will be given on the main unit 15.

On an upper surface of the base plate 28a, a body tube 46 is protruded concentrically with the spherical shaft 29, and a tilt detecting unit 47 is disposed on a lower portion of the body tube 46.

The tilt detecting unit 47 comprises an X-axis tilt detector 48, a Y-axis tilt detector 49, and a Z-axis tilt detector 50. The X-axis tilt detector 48 and the Y-axis tilt detector 49 are arranged in directions running perpendicular to each other. The Z-axis tilt detector 50 is arranged in a direction perpendicular to the X-axis tilt detector 48 and the Y-axis tilt detector 49.

A first bubble tube holding plate 120 having a plane running perpendicular to an axis of the body tube 46 and having an L-shaped planar shape and a first light emitting element holding plate 121 running in parallel to the bubble tube holding plate 120 are mounted on the body tube 46. A second bubble tube holding plate 122 having a plane perpendicular to the first bubble tube holding plate 120 is mounted on the body tube 46.

On the first bubble tube holding plate 120, an X-axis slit 123 is formed in a direction perpendicular to the paper surface in Fig. 1, and a Y-axis slit 124 is formed in parallel to the paper surface in Fig. 1. Further, on the second bubble tube holding plate 122, a Z-axis slit 125 is formed in a direction perpendicular to the Y-axis slit 124 and in parallel to the paper surface in Fig. 1.

An X-axis bubble tube 52x is provided at a position opposite to the X-axis slit 123. An axis of the X-axis bubble tube 52x is included in a plane, which runs perpendicularly to the axis of the body tube 46. Photodetection elements 54a and 54b such as photodiodes are arranged respectively at positions opposite to both ends of the X-axis bubble tube 52x. On the light emitting element holding plate 121, a light emitting element 53x such as a light emitting diode (LED) is arranged at a position opposite to the X-axis slit 123. An optical axis of the light emitting element 53x runs in parallel to the axis of the body tube 46 and perpendicularly crosses the axis of the X-axis bubble tube 52x at the center.

The X-axis bubble tube 52x, the light emitting element 53x, and the photodetection elements 54a and 54b make up together the X-axis tilt detector 48.

A Y-axis bubble tube 52y is disposed at a position opposite to the Y-axis slit 124. An axis of the Y-axis bubble tube 52y is included in a plane, which runs perpendicularly to the axis of the body tube 46, and the axis of the Y-axis bubble tube 52y is extended in a direction perpendicular to the axis of the X-axis bubble tube 52x. Photodetection elements 54a and 54b such as photodiodes are arranged at positions opposite to both ends of the Y-axis bubble tube 52y. On the light emitting element holding plate 121, a light emitting element 53y such as a light emitting diode (LED) is disposed at a position opposite to the Y-axis slit 124. An optical axis of the light emitting element 53y runs in parallel to the axis of the body tube 46 and perpendicularly crosses the axis of the Y-axis bubble tube 52y at the center.

The Y-axis bubble tube 52y, the light emitting element 53y, and the photodetection elements 54a and 54b make up together the Y-axis tilt detector 49.

At a position opposite to the Z-axis slit 125, a Z-axis bubble tube 52z is disposed between the first bubble tube holding plate 120 and the light emitting element holding plate 121. An axis of the Z-axis bubble tube 52z runs in parallel to the axis of the body tube 46. At positions opposite to both ends of the Z-axis bubble tube 52z, photodetection elements 54a and 54b such as photodiodes are provided. On the light emitting element holding plate 121, a light emitting element 53z such as a light emitting diode (LED) is arranged at a position opposite to the Z-axis slit 125. An optical axis of the light emitting element 53z perpendicularly crosses the axis of the Z-axis bubble tube 52z at the center.

The Z-axis bubble tube 52z, the light emitting element 53z, and the photodetection elements 54a and 54b make up together the Z-axis tilt detector 50.

As described above, the X-axis tilt detector 48, the Y-axis tilt detector 49, and the Z-axis tilt detector 50 have the same structure. Each of these comprises the bubble tube 52, and the light emitting element 53 such as a light emitting diode (LED) and the photodetection elements 54a and 54b such as photodiodes, which are arranged so as to sandwitch the bubble tube 52. The photodetection elements 54a and 54b receive the light, which has passed through the bubble tube 52. Photodetection amounts of the photodetection elements 54a and 54b varies according to the position of an air bubble in the bubble tube 52 (i.e. tilting of the bubble tube 52). Photodetection signals corresponding to the photodetection amounts of the photodetection elements 54a and 54b are outputted. The photodetection signal is inputted to the control unit 45. The control unit 45 calculates a tilting direction and an amount of tilting based on deviation between the photodetection signals, and the tilting of the laser irradiating system 13 is detected.

When the laser irradiating system 13 is installed at standard position (erected state as shown in Fig. 1), the X-axis tilt detector 48 and the Y-axis tilt detector 49 detect tilting with respect to a horizontal plane. When the laser irradiating system 13 is laid down by an angle of 90°(i.e. in horizontally laid state), the X-axis tilt detector 48 and the Z-axis tilt detector 50 detect tilting with respect to the horizontal plane.

In the body tube 46, there are provided a first laser diode 55 for emitting a visible light (e.g. a green laser beam), and a first collimator lens 56 having the same optical axis as an optical axis of the first laser diode 55. The optical axis of each of the first laser diode 55 and the first collimator lens 56 concurs with the center line of the body tube 46.

On a hollow upper end portion of the body tube 46, a cylindrical lens holder 57 is disposed. At the center of the cylindrical lens holder 57, an optical path 58 concurring with the optical axis is formed. A first rod lens 59 is disposed at an upper end of the optical path 58, and a center line of the first rod lens 59 concurs with the optical axis.

An upper portion of the casing 28 is formed as a head case 62, and a cylindrical unit 62a is formed at the center of the head case 62. The cylindrical unit 62a is engaged on the upper end of the body tube 46 via a bearing 61. The head case 62 can be feely rotated with respect to the body tube 46. A rotary gear 68 is fixed on the cylindrical unit 62a. A driving gear 69 engaged with the rotary gear 68 can be rotated by a head rotating motor 71.

A recess 63 is formed on the head case 62. A corner cube prism 64 is disposed at a bottom of the recess 63. Inside the head case 62, a pentagonal prism 65 positioned adjacent to the corner cube prism 64 is accommodated via the bottom. In the head case 62, an optical path 66 is formed where a laser beam passes through.

A first laser beam 60 emitted from the first laser diode 55 passes through the first collimator lens 56 and is turned to parallel luminous fluxes. The luminous fluxes pass along the center line of the first rod lens 59 and are reflected in parallel by the corner cube prism 64 and is reflected in a perpendicular direction by the pentagonal prism 65. Then, the parallel luminous fluxes pass through the first rod lens 59 in a direction perpendicular to the center line of the first rod lens 59. When the luminous fluxes pass through the first rod lens 59, the fluxes are diffused only in a horizontal direction, and a laser beam in fan-like shape is irradiated from the head case 62.

The first laser diode 55, the first collimator lens 56 and the first rod lens 59 make up together a first light emitting unit. The corner cube prism 64 and the pentagonal prism 65 make up together a first irradiation optical system. The head case 62, the corner cube prism 64, and the pentagonal prism 65 make up together a rotary head 67.

On the lower portion of the casing 28 and on a side opposite to the vertical base plate 16b, a line laser light emitting unit 72 is provided. A second light emitting unit 74 is accommodated in the line laser light emitting unit 72.

The second light emitting unit 74 comprises a second laser diode 75, a second collimator lens 76, and a second rod lens 77. The second laser diode 75 emits a visible light (e.g. a red laser beam). The laser beam crosses a reference plane formed by the first laser beam at a sharp angle (e.g. at 45°), and the laser beam has an optical axis extended in an obliquely downward direction. The second rod lens 77 has an optical axis, which perpendicularly crosses the optical axis of the laser beam and is extended in a horizontal direction.

A second laser beam 70 projected from the second laser diode 75 is turned to parallel luminous fluxes by the second collimator lens 76. When the luminous fluxes pass through the second rod lens 77, and the fluxes are diffused only in a vertical direction, and a laser beam in fan-like shape is irradiated.

A signal light receiving window 78 is disposed at an upper portion of the line laser light emitting unit 72 of the casing 28, and a signal light photodetector 79 is provided at a position opposite to the signal light receiving window 78. A photodetection signal at the signal light photodetector 79 is sent to the control unit 45. The control unit 45 detects a communication signal in the photodetection signal from the signal light photodetector 79 and changes an irradiating direction of the first laser beam 60 by driving and controlling the head rotating motor 71.

At a position on the casing 28 opposite to the vertical base plate 16b, an alignment bar 81 is rotatably arranged around a horizontal axis via a rotation shaft 82. The alignment bar 81 has such a mechanism that the position of the alignment bar 81 is held respectively at an alignment position shown in Fig. 1 and at a storage position rotated by an angle of 180°from the alignment position. At a forward end of the alignment bar 81, a laser beam finder 83 is provided. When the alignment bar 81 is at the alignment position, the laser beam finder 83 is positioned within the horizontal plane formed by the first laser beam 60, and the laser beam finder 83 has the center line, which perpendicularly crosses the center line of the first rod lens 59.

Between the bottom plate 28a and the horizontal base plate 16a, dustproof bellows 84 are provided. A recess 85 is formed on the bellows 84 and the horizontal base plate 16a so that the interference with the second laser beam 70 can be prevented.

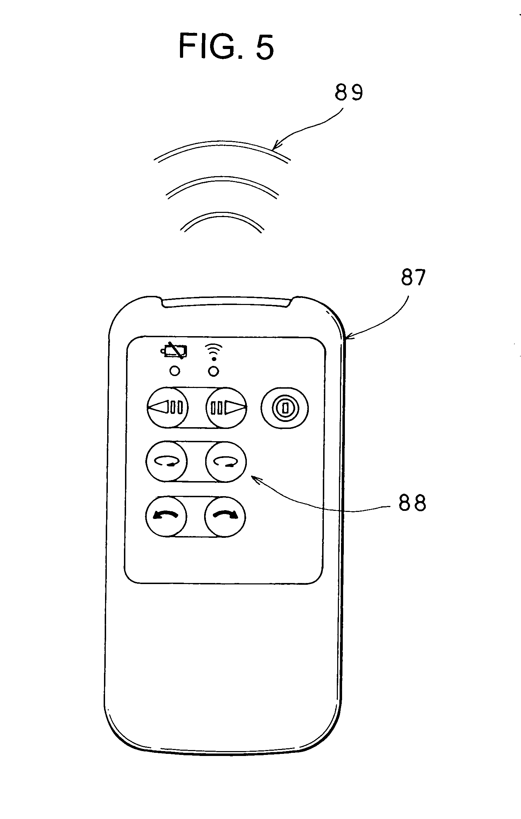

Fig. 5 shows a remote controller 87. The remote controller 87 can project a signal light 89 with superimposed communication signals by means such as modulation. The remote controller 87 has an operation button 88. Through the operation of the operation button 88, required operation can be carried out such as driving or stopping of the laser irradiating system 13, rotation of the rotary head 67, tilting of the main unit 15, etc.

Description will be given below on operation.

As shown in Fig. 1, the laser irradiating system 13 is installed in erected state and driving is started, and leveling operation by the leveling unit 14 is initiated. In the erected state, the laser beam finder 83 is kept in storage condition so that interference with the first laser beam 60 does not occur.

In the erected state, the results of tilt detection from the X-axis tilt detector 48 and the Y-axis tilt detector 49 are inputted to the control unit 45, and the X-axis leveling unit 25 and the Y-axis leveling unit 26 are operated so that the X-axis tilt detector 48 and the Y-axis tilt detector 49 detect the horizontality.

For instance, a tilting direction and an amount of tilting with respect to the Y-axis are detected according to signals from the photodetection elements 54a and 54b of the Y-axis tilt detector 49, and the Y-axis leveling unit 26 is operated. The Y-axis leveling motor 41 is driven by the control unit 45. The worm wheel 37 is rotated via the worm gear 38 by the driving of the Y-axis leveling motor 41. When the worm wheel 37 is rotated, the Y-axis rod 34 is displaced in a vertical direction. By the vertical displacement of the Y-axis rod 34, the bottom plate 28a is tilted with its center on a virtual line, which connects the spherical shaft 29 with the X-axis rod 33.

Similarly, based on detection results of the X-axis tilt detector 48, the X-axis leveling unit 25 is operated. The bottom plate 28a is tilted with its center on a virtual line, which connects the spherical shaft 29 with the Y-axis rod 34.

By the operation of the X-axis leveling unit 25 and the Y-axis leveling unit 26, the bottom plate 28a is leveled at the horizontal position.

When the bottom plate 28a is leveled at the horizontal position, the optical axis of the first laser diode 55 is adjusted in a vertical direction. Further, the corner cube prism 64 reflects the light in parallel with respect to the incident light, and the pentagonal prism 65 reflects the light in a direction perpendicular to the incident light. The first laser beam 60 in fan-like shape irradiated from the rotary head 67 is irradiated in a horizontal direction and with horizontal spreading. As a result, a horizontal reference plane is formed, and the laser beam projected to a wall surface, etc. forms a horizontal reference line.

The second laser beam 70 irradiated from the second light emitting unit 74 has spreading in a vertical direction. The second laser beam 70 forms a vertical reference plane, and the laser beam projected to a wall surface, etc. forms a vertical reference line.

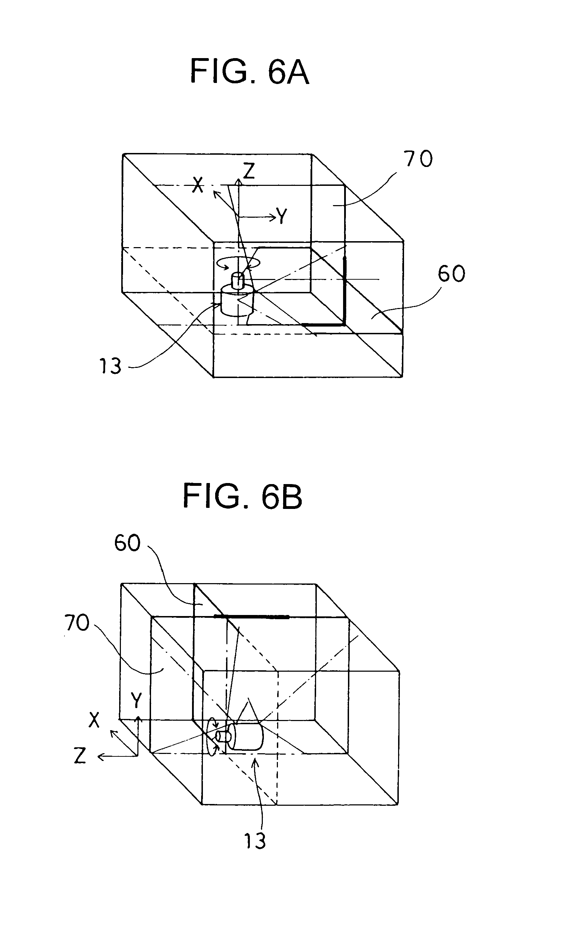

Irradiating state of each of the first laser beam 60 and the second laser beam 70 is shown in Fig. 6 (A). The irradiated first laser beam 60 and the second laser beam 70 are laser beams in fan-like shape and provide partial irradiation. Thus, high brightness can be kept and visibility is high. The horizontal reference line is in green, and the vertical reference line is in red. Thus, it is easy to discriminate these reference lines from each other and working efficiency can be improved.

When the irradiating direction of the first laser beam 60 is to be changed, a command for the change is issued from the remote controller 87. The signal light 89 is received by the signal light photodetector 79 via the signal light receiving window 78. By the control unit 45, the communication signal is calculated and extracted, and the head rotating motor 71 is driven. When the head rotating motor 71 is driven, the head case 62 is rotated via the driving gear 69 and the rotary gear 68, and the irradiating direction of the first laser beam 60 is changed.

Even when the rotation of the head case 62 is accompanied with fluctuation and vibration, the condition that the first laser beam 60 perpendicularly crosses the optical axis of the first laser diode 55 is guaranteed by the corner cube prism 64 and the pentagonal prism 65. Thus, fluctuation, oscillation, etc. of the first laser beam 60 do not occur.

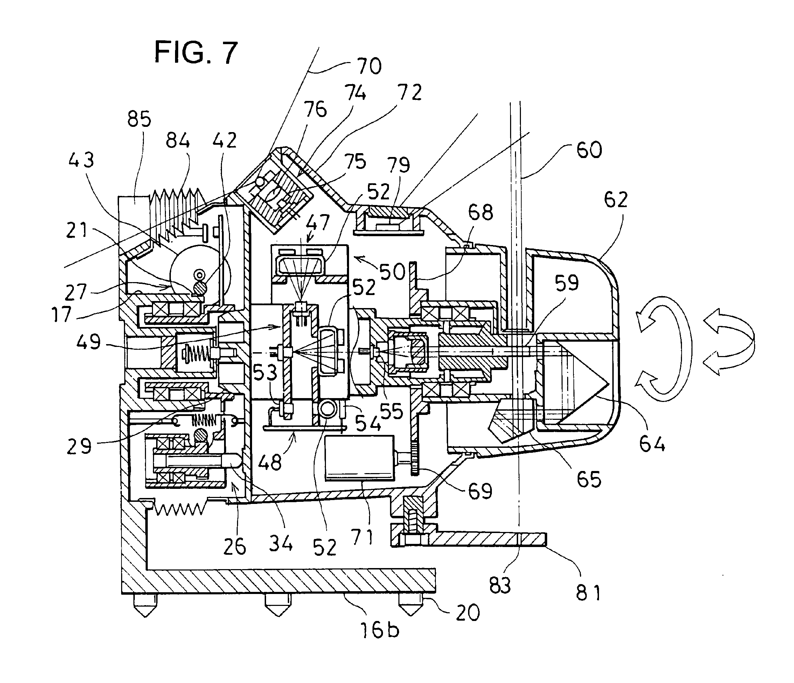

Fig. 7 shows the laser irradiating system 13 when the laser irradiating system 13 is installed by being laid down by an angle of 90°(horizontally laid state).

In the horizontally laid state, two vertical planes perpendicularly crossing each other can be formed as shown in Fig.6(B).

When the laser irradiating system 13 is laid horizontally, the alignment bar 81 is pulled out. When the first laser beam 60 is irradiated in a downward direction under this state, the laser beam passing through the laser beam finder 83 is projected to a floor surface as a point. The projected point can be used as a reference point when the laser irradiating system 13 is installed, and the laser irradiating system 13 can be installed quickly and with high accuracy.

When the laser irradiating system 13 is driven, leveling operation by the leveling unit 14 is initiated. When the laser irradiating system 13 is laid horizontally, leveling operation is performed based on detection signals from the Z-axis tilt detector 50 and the X-axis tilt detector 48.

The Y-axis leveling unit 26 is operated so that the detection signal from the Z-axis tilt detector 50 indicates the horizontality, and the rolling compensation unit 27 is operated so that the X-axis tilt detector 48 indicates the horizontality.

When the rolling compensation motor 43 is driven, the worm gear 42 is rotated. Because the gear 21 is formed on the outer tube 17 which is fixed, the rolling compensation motor 43 is rotated integrally with the bottom plate 28a. When the X-axis tilt detector 48 detects the horizontality, a reference plane formed by the second laser beam 70 is set in a vertical direction. When the Z-axis tilt detector 50 detects the horizontality, the reference plane formed by the first laser beam 60 is set in a vertical direction.

The irradiating direction of the first laser beam 60 can be changed by the remote controller 87 similarly to the case of the erected state.

Next, description will be given on an aspect where the X-axis tilt detector 48 is used.

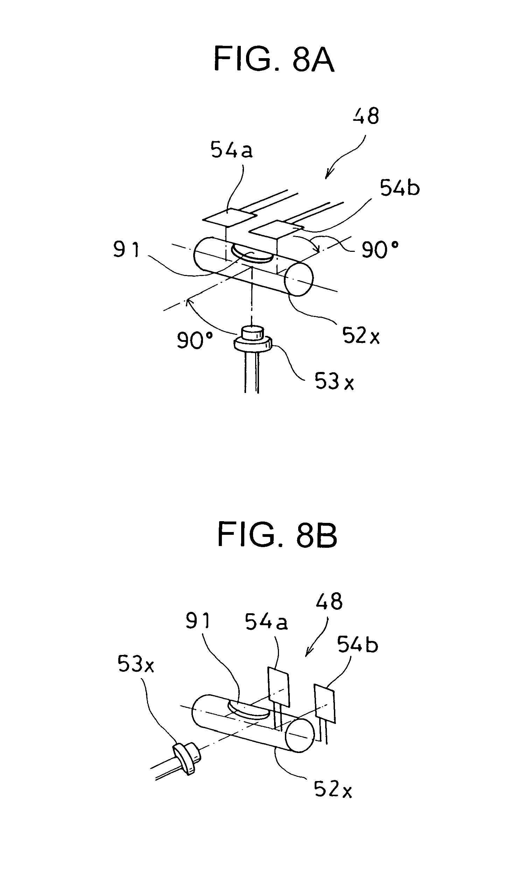

Fig. 8 (A) shows a case where the laser irradiating system 13 is in the erected state. An air bubble 91 in the bubble tube 52 is at a position to face to the photodetection elements 54a and 54b. A liquid surface formed by the air bubble 91 runs almost perpendicularly to an optical axis of the light emitting element 53. A light from the light emitting element 53 is interrupted depending on the position of the air bubble 91 or the light is reflected by the liquid surface and is refracted. Thus, amounts of the lights reaching the photodetection elements 54a and 54b varies accordingly. Therefore, by obtaining the difference of the amounts of the lights between the photodetection elements 54a and 54b, it is possible to detect the position of the air bubble 91, i.e. the tilting direction and the amount of tilting.

Fig. 8 (B) represents the condition where the laser irradiating system 13 is in horizontally laid state. In this case, the X-axis bubble tube 52x is rotated at an angle of 90°around the axis with respect to the X-axis tilt detector 48. However, the bubble tube is designed in form of a barrel, in which any cross-section is in form of a regular circle, and the direction of the axis is not changed.

In the X-axis bubble tube 52x, the air bubble 91 is rotated at an angle of 90°around the axis of the X-axis bubble tube 52x from the erected state. Then, the air bubble 91 is turned to a position deviated by an angle of 90°from the photodetection elements 54a and 54b, i.e. the liquid surface is turned to a direction approximately parallel to the optical axis of the light emitting element 53. In this case, the total amount of the light received by the photodetection elements 54a and 54b is higher than the amount of the light received in case of the erected state. The light from the light emitting element 53 is interrupted depending on the position of the air bubble 91 or the light is reflected by the liquid surface and is refracted. As a result, the amount of the light reaching the photodetection elements 54a and 54b is changed. By obtaining a difference between the amounts of the lights received by the photodetection elements 54a and 54b, it is possible to detect the position of the air bubble 91, i.e. the tilting direction and the amount of tilting.

The X-axis tilt detector 48 detects tilting in two states, i.e. the erected state and the horizontally laid state, of the laser irradiating system 13.

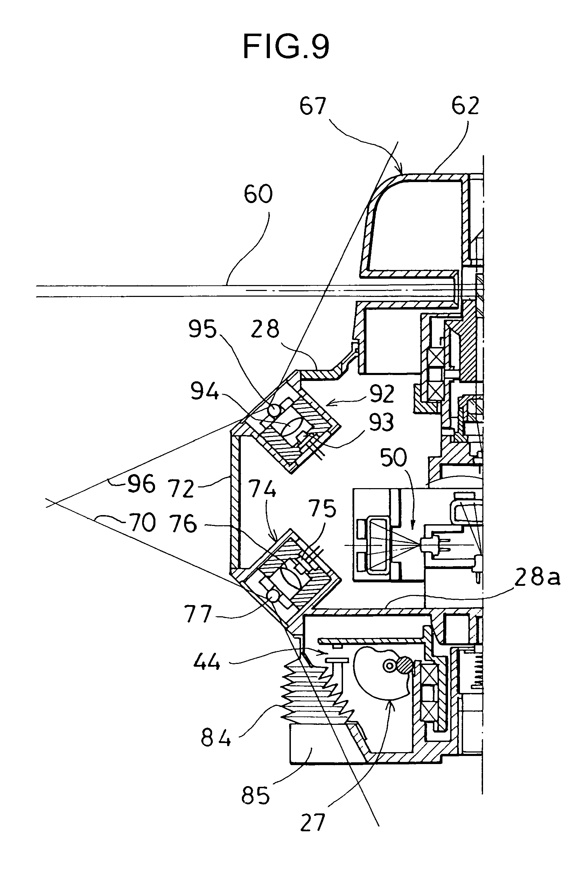

Fig. 9 shows a second embodiment of the present invention. In the second embodiment, a third light emitting unit 92 having a structure similar to the structure of the second light emitting unit 74 is provided.

The line laser light emitting unit 72 is formed so that two inclined surfaces are formed above and under. On a lower inclined surface, the second light emitting unit 74 is disposed, and the third light emitting unit 92 is arranged on an upper inclined surface. The third light emitting unit 92 comprises a third laser diode 93, a third collimator lens 94, and a third rod lens 95, and it has the same arrangement as the arrangement of the second light emitting unit 74.

The optical axis of the second laser diode 75 is on the same plane as an optical axis of the third light emitting unit 92. These two optical axes cross each other at a predetermined angle, e.g. at an angle of 90°, and a center line of the third rod lens 95 is in parallel to a center line of the second rod lens 77. A laser beam 70 in fan-like shape irradiated from the second light emitting unit 74 and a third laser beam 96 in fan-like shape irradiated from the third light emitting unit 92 are included in the same plane. Therefore, the second laser beam 70 and the third laser beam 96 form a continuous reference plane. Thus, it is possible to maintain high brightness and to form a reference plane for a wide range.

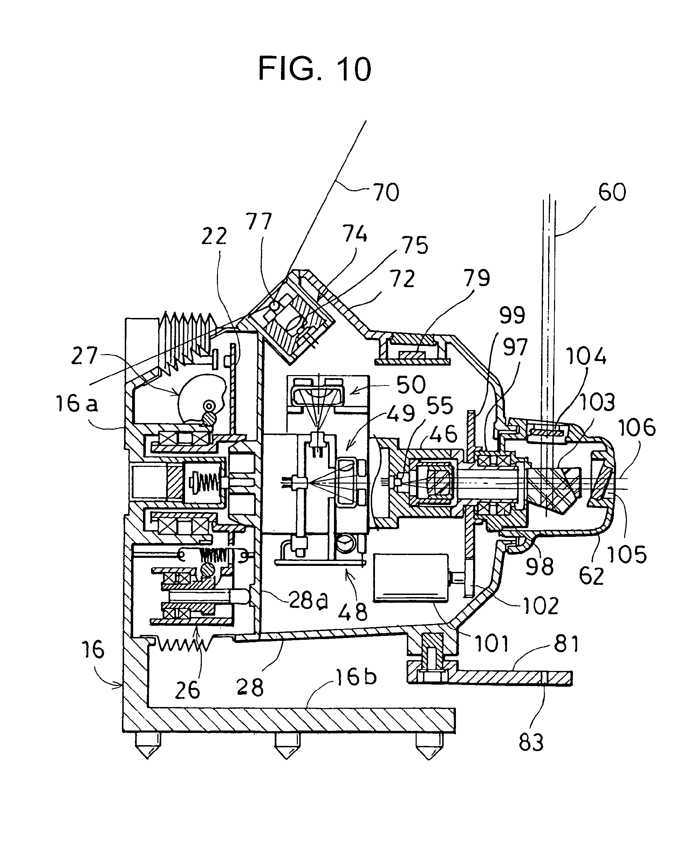

Fig. 10 shows a third embodiment of the present invention.

In the third embodiment, a reference plane is formed by projecting the first laser beam 60 in rotary irradiation. In Fig. 10, the equivalent component as shown in Fig. 1 is referred by the same symbol, and detailed description is not given here.

At a forward end of the body tube 46, a rotating body 97 is rotatably mounted via a bearing 98. On the rotating body 97, a scanning rotary gear 99 is disposed. The scanning rotary gear 99 is rotated by a scanning motor 101 via a scanning driving gear 102.

On the rotating body 97, a pentagonal prism 103 is disposed on the optical axis of the first laser diode 55, and a head case 62 to accommodate the pentagonal prism 103 is disposed. In the head case 62, there are provided a first irradiation window 104, which transmits the first laser beam 60 deflected by the pentagonal prism 103, and a second irradiation window 105, which transmits a fourth laser beam 106 divided by the pentagonal prism 103.

The first laser beam 60 projected from the first laser diode 55 is deflected to a direction perpendicular to the optical axis of the first laser diode 55 by the pentagonal prism 103 and is irradiated through the first irradiation window 104. When the scanning motor 101 is driven and the pentagonal prism 103 is rotated via the scanning driving gear 102 and the scanning rotary gear 99, the first laser beam 60 is projected in rotary irradiation, and a reference plane is formed. After passing through the second irradiation window 105, the fourth laser beam 106 is irradiated on an optical axis of the first laser diode 55, and a reference line is formed.

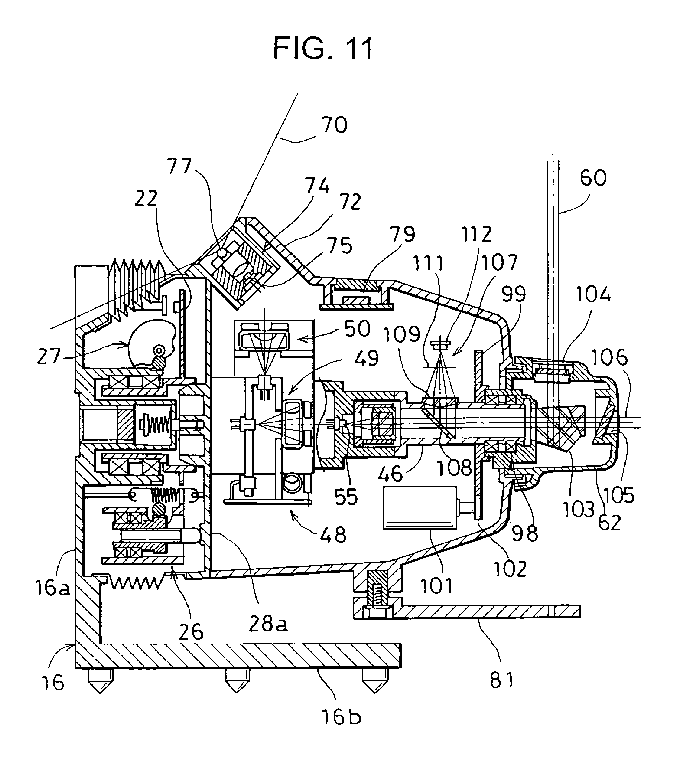

Fig. 11 represents a fourth embodiment of the present invention.

In the fourth embodiment, visibility of the reference plane and the reference line formed by the first laser beam 60 is increased compared with the third embodiment. In Fig. 11, the equivalent component as shown in Fig. 10 is referred by the same symbol, and detailed description is not given here.

Compared with the third embodiment, a photodetector 107 is further provided and an object reflector (not shown) is used in the fourth embodiment. The laser irradiating system 13 detects the object reflector. Reciprocal scanning is performed for a predetermined range around the object reflector. Apparent brightness of the irradiated laser beam is increased, and visibility is improved.

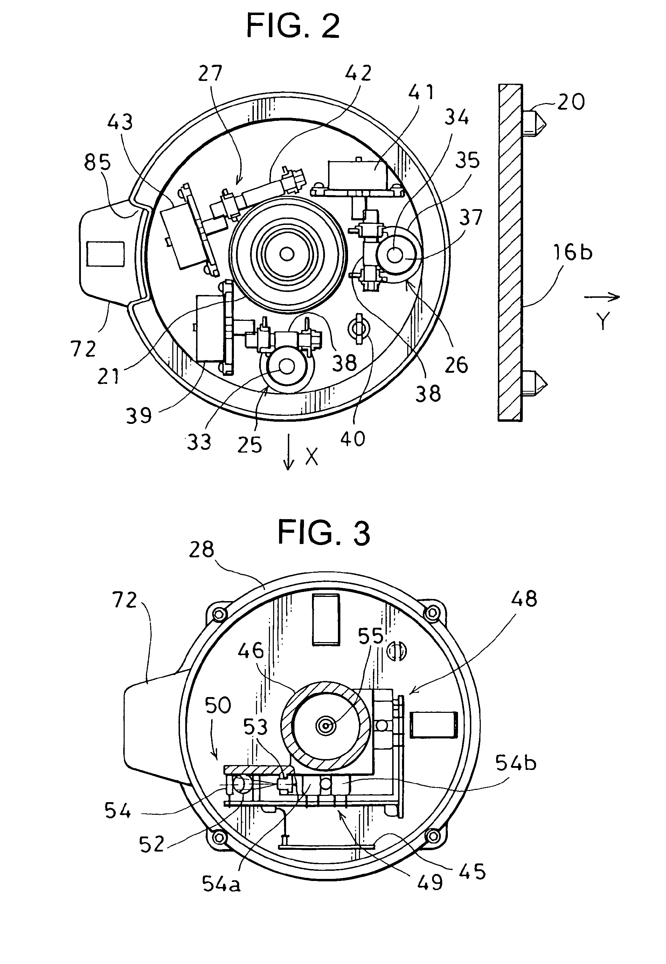

An aperture mirror (perforated mirror) 108 is disposed at a predetermined position in the body tube 46. On a reflection optical axis of the aperture mirror 108, there are provided a condenser lens 109, a polarizing plate 111, and a photodetection element 112. A photodetection signal of the photodetection element 112 is sent to the control unit 45 (See Fig. 3).

By scanning the first laser beam 60, the first laser beam 60 passes through the object reflector, the first laser beam 60 is reflected by the object reflector. The reflected light passes through the first irradiation window 104 and the pentagonal prism 103. The reflected light is further reflected by the aperture mirror 108 and is converged by the condenser lens 109 and is received by the photodetection element 112. The photodetection element 112 sends a photodetection signal to the control unit 45. The control unit 45 detects the irradiating direction of the first laser beam 60 when the photodetection element 112 receives the light and stores the data. Then, the scanning motor 101 is driven and controlled so that the first laser beam 60 is projected for reciprocal scanning within a predetermined angle around the detected irradiating direction. The polarizing plate 111 is arranged so as to have the direction of polarization aligned with a polarizing plane of the received reflection light. The polarizing plate 111 cuts off noise light included in the incident reflection light, and this contributes to the improvement of accuracy to discriminate the object reflector.

## Claims

1. A laser irradiating system (13), which comprises a leveling unit (14) and a main unit (15) provided on said leveling unit (14) and which forms a reference plane by the laser beam (60) being irradiated from said main unit (15),
wherein said main unit (15) comprises a rotating unit (67) for accommodating an irradiation optical system, a first light emitting unit for emitting a first laser (60) beam to a center of rotation of said rotating unit (67), and a second light emitting unit (74) for irradiating a second laser beam (70) of fan-like shape with spreading in parallel to an optical axis of said first light emitting unit, wherein said irradiation optical system irradiates the first laser beam (60) from said first light emitting unit by deflecting toward a perpendicular direction and forms a first reference plane, and
wherein said irradiation optical system comprises a corner cube prism (64),
**characterized in**
**that** the second laser beam (70) irradiated from said second light emitting unit forms a second reference plane, which perpendicularly crosses the first reference plane,
**that** said first light emitting unit has a rod lens (59) disposed concentrically on the center of rotation of the rotating unit (67),
**that** the corner cube prism (64) is for reflecting said first laser beam (60) passing through said rod lens (59) in parallel direction,
**that** said irradiation optical system comprises a pentagonal prism (65) for deflecting a reflection light from said corner cube prism (64) at a right angle and for allowing the light to enter said rod lens (59) from a perpendicular direction, wherein said irradiated first laser beam (60) is a light beam in fan-like shape with horizontal spreading,
**that** the second laser beam (70) has an optical axis extended in an obliquely downward direction,
**that** the second light emitting unit (74) comprises a second rod lens (77) which has an optical axis, which perpendicularly crosses the optical axis of the second laser beam (70) and is extended in a horizontal direction, that the second laser beam (70) is turned to parallel luminous fluxes, when the luminous fluxes pass through the second rod lens (77), and the fluxes are diffused only in a vertical direction, and a laser beam in fan-like shape is irradiated,
**that** the laser irradiating system (13) includes a motor (71) for rotating said rotating unit (67) about a vertical rotation axis, and a signal light receiving unit (79),
**that** the laser irradiating system (13) is adapted to drive said motor (71) based on a photodetection signal from said signal light receiving unit (79) and to change an irradiating direction of the first laser beam (60) by driving and controlling the head rotating motor (71).

2. The laser irradiating system (13) according to claim 1,
wherein said leveling unit (14) is provided on a base (16) having installation surfaces crossing perpendicularly to each other, and said leveling unit (14) is mounted on one of said installation surfaces of said base (16).

3. The laser irradiating (13) system according to claim 1,
wherein said main unit (15) is tiltably supported in any direction as desired, said main unit (15) comprises a tilt detecting unit (47) for detecting tilting in two horizontal directions, said leveling unit (14) comprises two sets of leveling subunits (25, 26) capable to tilt said main unit (15) in two directions independently, and said two sets of leveling subunits (25, 26) are driven based on result of detection by said tilt detecting unit (47).

4. The laser irradiating system (13) according to claim 1,
wherein said main unit (15) is tiltably supported in any direction as desired by a spherical bearing, said main unit (15) comprises a tilt detecting unit (47) for detecting tilting in three directions perpendicularly crossing each other, said leveling unit (14) comprises two sets of leveling subunits (25, 26) capable to tilt said main unit independently in two directions and a rolling compensation unit (27) for rotating said main unit (15) around said spherical bearing, and said two sets of leveling subunits and said rolling compensation unit (27) are driven based on result of detection by said tilt detecting unit (47).

5. The laser irradiating system (13) according to claim 1,
wherein said irradiation optical system comprises a pentagonal prism (103) disposed on the center of rotation of said rotating unit (67), and the laser beam (60) deflected by said pentagonal prism (103) is projected for scanning and a reference plane is formed when said rotating unit (67) is rotated.

6. The laser irradiating system (13) according to claim 1,
wherein said main unit (15) comprises a third light emitting unit (92) having an optical axis tilted with respect to said second light emitting unit (74), and said third light emitting unit (92) irradiates a third laser beam (96) in fan-like shape, wherein said third laser beam (96) has spreading in the same direction as said second laser beam (70) and is irradiated in the same plane as said second laser beam (70).

7. The laser irradiating system (13) according to claim 1,
wherein an optical axis of said second light emitting unit (74) is tilted with respect to the first reference plane formed by said first laser beam (60).

8. The laser irradiating system (13) according to claim 1,
wherein color of said first light emitting unit is different from color of said second laser beam (70).

9. The laser irradiating system (13) according to claim 1,
wherein said second light emitting unit (74) irradiates said second laser beam (70) in fan-like shape via said second rod lens (77).

10. The laser irradiating system (13) according to claim 6,
wherein said third light emitting unit (92) irradiates said third laser beam (96) in fan-like shape via a rod lens (95).

11. The laser irradiating system (13) according to claim 1,
wherein said main unit (15) has a body tube (46) for accommodating said first light emitting unit, and said rotating unit (67) is rotatably mounted on said body tube (46).

## Patentansprüche

1. Laserbestrahlungssystem (13), das eine Nivellierungseinheit (14) und eine Haupteinheit (15), die auf der Nivellierungseinheit (14) vorgesehen ist, umfasst und das eine Referenzebene bildet, indem der Laserstrahl (60) von der Haupteinheit (15) ausgestrahlt wird,
wobei die Haupteinheit (15) eine Dreheinheit (67) zum Aufnehmen eines optischen Bestrahlungssystems, eine erste lichtemittierende Einheit zum Emittieren eines ersten Laserstrahls (60) zu einem Mittelpunkt der Drehung der Dreheinheit (67) und eine zweite Lichtbestrahlungseinheit (74) zum Ausstrahlen eines zweiten Laserstrahls (70) mit einer fächerartigen Form mit einer Ausbreitung parallel zu einer optischen Achse der ersten lichtemittierenden Einheit umfasst, wobei das optische Bestrahlungssystem den ersten Laserstrahl (60) von der ersten lichtemittierenden Einheit durch Ablenken in Richtung einer senkrechten Richtung ausstrahlt und eine erste Bezugsebene bildet und
wobei das optische Bestrahlungssystem ein Eckwürfelprisma (64) umfasst, **dadurch gekennzeichnet, dass**
der zweite Laserstrahl (70), der von der zweiten lichtemittierenden Einheit ausgestrahlt wird, eine zweite Bezugsebene bildet, die die erste Bezugsebene senkrecht kreuzt,
die erste lichtemittierende Einheit eine Stablinse (5) besitzt, die konzentrisch auf dem Mittelpunkt der Drehung der Dreheinheit (67) angeordnet ist,
das Eckwinkelprisma (64) dazu dient, den ersten Laserstrahl (60), der sich durch die Stablinse (59) bewegt, in eine parallele Richtung zu reflektieren,
das optische Bestrahlungssystem ein fünfeckiges Prisma (65) umfasst, um Reflexionslicht von dem Eckwürfelprisma (64) in einem rechten Winkel abzulenken und um dem Licht zu ermöglichen, von einer senkrechten Richtung in die Stablinse (59) einzutreten, wobei der ausgestrahlte erste Laserstrahl (60) ein Lichtstrahl in einer fächerartigen Form mit einer horizontalen Ausbreitung ist,
der zweite Laserstrahl (70) eine optische Achse besitzt, die sich in einer schrägen Abwärtsrichtung erstreckt,
die zweite lichtemittierende Einheit (74) eine zweite Stablinse (77) umfasst, die eine optische Achse besitzt, die die optische Achse des zweiten Laserstrahls (70) senkrecht kreuzt und die sich in einer horizontalen Richtung erstreckt,
der zweite Laserstrahl (70) in parallele Lichtströme gedreht wird, wenn die Lichtströme durch die zweite Stablinse (77) passieren und die Flüsse ausschließlich in einer vertikalen Richtung gestreut werden und ein Laserstrahl in einer fächerartigen Form abgestrahlt wird,
das Laserbestrahlungssystem (13) einen Motor (71), um die Dreheinheit (67) um eine vertikale Drehachse zu drehen, und eine Signallichtempfangseinheit (79) enthält,
das Laserbestrahlungssystem (13) ausgelegt ist, den Motor (71) aufgrund eines Photodetektionssignals von der Signallichtempfangseinheit (79) anzutreiben und eine Bestrahlungsrichtung des ersten Laserstrahls (60) durch Antreiben und Steuern des den Kopf drehenden Motors (71) zu ändern.

2. Das Laserbestrahlungssystem (13) nach Anspruch 1,
wobei die Nivellierungseinheit (14) auf einer Basis (16) vorgesehen ist, die Installationsflächen besitzt, die einander senkrecht kreuzen, und die Nivellierungseinheit (14) auf einer der Installationsflächen des Basis (16) befestigt ist.

3. Das Laserbestrahlungssystem (13) nach Anspruch 1,
wobei die Haupteinheit (15) in jede Richtung beliebig neigbar gelagert wird, wobei die Haupteinheit (15) eine Neigungsdetektionseinheit (47) zum Detektieren der Neigung in zwei horizontalen Richtungen umfasst, wobei die Nivellierungseinheit (14) zwei Sätze von Nivellierungsuntereinheiten (25, 26) umfasst, die die Haupteinheit (15) unabhängig in zwei Richtungen neigen können, und die beiden Sätze von Nivellierungsuntereinheiten (25, 26) aufgrund eines Ergebnisses der Detektion durch die Neigungsdetektionseinheit (47) angetrieben werden.

4. Das Laserbestrahlungssystem (13) nach Anspruch 1,
wobei die Haupteinheit (15) durch ein Pendellager in jede Richtung beliebig neigbar gelagert wird, wobei die Haupteinheit (15) eine Neigungsdetektionseinheit (47) zum Detektieren der Neigung in drei Richtungen, die einander senkrecht kreuzen, umfasst, wobei die Nivellierungseinheit (14) zwei Sätze von Nivellierungsuntereinheiten (25, 26), die die Haupteinheit unabhängig in zwei Richtungen neigen können, und eine Rollkompensationseinheit (27) zum Drehen der Haupteinheit (15) um das Pendellager umfasst und wobei die beiden Sätze von Nivellierungsuntereinheiten und die Rollkompensationseinheit (27) aufgrund eines Ergebnisses der Detektion durch die Neigungsdetektionseinheit (47) angetrieben werden.

5. Das Laserbestrahlungssystem (13) nach Anspruch 1,
wobei das optische Bestrahlungssystem ein fünfeckiges Prisma (103) umfasst, das auf dem Mittelpunkt der Drehung der Dreheinheit (67) angeordnet ist, und der Laserstrahl (60), der durch das fünfeckige Prisma (103) abgelenkt wird, zum Abtasten projiziert wird und eine Bezugsebene gebildet wird, wenn die Dreheinheit (67) gedreht wird.

6. Das Laserbestrahlungssystem (13) nach Anspruch 1,
wobei die Haupteinheit (15) eine dritte lichtemittierende Einheit (92) umfasst, die eine optische Achse besitzt, die in Bezug auf die zweite lichtemittierende Einheit (74) geneigt ist, und die dritte lichtemittierende Einheit (92) einen dritten Laserstrahl (96) in einer fächerartigen Form ausstrahlt, wobei der dritte Laserstrahl (96) eine Ausbreitung in dieselbe Richtung wie der zweite Laserstrahl (70) aufweist und in derselben Ebene wie der zweite Laserstrahl (70) ausgestrahlt wird.

7. Das Laserbestrahlungssystem (13) nach Anspruch 1,
wobei eine optische Achse der zweiten lichtemittierenden Einheit (74) in Bezug auf die erste durch den ersten Laserstrahl (60) gebildete Bezugsebene geneigt ist.

8. Das Laserbestrahlungssystem (13) nach Anspruch 1,
wobei die Farbe der ersten lichtemittierenden Einheit von der Farbe des zweiten Laserstrahls (70) verschieden ist.

9. Das Laserbestrahlungssystem (13) nach Anspruch 1,
wobei die zweite lichtemittierende Einheit (74) den zweiten Laserstrahl (70) in einer fächerartigen Form über die zweite Stablinse (77) ausstrahlt.

10. Das Laserbestrahlungssystem (13) nach Anspruch 6,
wobei die dritte lichtemittierende Einheit (92) den dritten Laserstrahl (96) in einer fächerartigen Form über eine Stablinse (95) ausstrahlt.

11. Das Laserbestrahlungssystem (13) nach Anspruch 1,
wobei die Haupteinheit (15) eine Körperröhre (46) besitzt, um die erste lichtemittierende Einheit aufzunehmen, und die Dreheinheit (67) drehbar auf der Körperröhre (46) befestigt ist.

## Revendications

1. Système d'irradiation par laser (13), qui comprend une unité de nivellement (14) et une unité principale (15) disposée sur ladite unité de nivellement (14) et qui forme un plan de référence au moyen du faisceau laser (60) irradié depuis ladite unité principale (15),
dans lequel ladite unité principale (15) comprend une unité rotative (67) destinée à loger un système optique d'irradiation, une première unité émettrice de lumière destinée à émettre un premier faisceau laser (60) vers un centre de rotation de ladite unité rotative (67), et une deuxième unité émettrice de lumière (74) destinée à irradier un deuxième faisceau laser (70) en forme d'éventail présentant un étalement en parallèle avec un axe optique de ladite première unité émettrice de lumière, dans lequel ledit système optique d'irradiation irradie le premier faisceau laser (60) à partir de ladite première unité émettrice de lumière par déviation vers une direction perpendiculaire et forme un premier plan de référence, et
dans lequel ledit système optique d'irradiation comprend un prisme coin de cube (64),
**caractérisé en ce que**
le deuxième faisceau laser (70) irradié à partir de ladite deuxième unité émettrice de lumière forme un second plan de référence, qui croise perpendiculairement le premier plan de référence,
ladite première unité émettrice de lumière possède une lentille barreau (59) disposée de façon concentrique sur le centre de rotation de l'unité rotative (67),
le prisme coin de cube (64) sert à réfléchir ledit premier faisceau laser (60) traversant ladite lentille barreau (59) dans la direction parallèle,
ledit système optique d'irradiation comprend un prisme pentagonal (65) pour dévier une lumière de réflexion à partir dudit prisme coin de cube (64) à un angle droit et pour permettre à la lumière de pénétrer dans ladite lentille barreau (59) à partir d'une direction perpendiculaire, dans lequel ledit premier faisceau laser irradié (60) est un faisceau lumineux en forme d'éventail à étalement horizontal,
le deuxième faisceau laser (70) a un axe optique étendu dans une direction obliquement descendante,
la deuxième unité émettrice de lumière (74) comprend une seconde lentille barreau (77) qui a un axe optique, qui croise perpendiculairement l'axe optique du deuxième faisceau laser (70) et est étendu dans une direction horizontale,
le deuxième faisceau laser (70) est tourné vers les flux lumineux parallèles, lorsque les flux lumineux traversent la seconde lentille barreau (77), et que les flux ne sont diffusés que dans une direction verticale, et qu'un faisceau laser en forme d'éventail est irradié,
le système d'irradiation par laser (13) inclut un moteur (71) pour faire tourner ladite unité rotative (67) autour d'un axe de rotation vertical, et une unité réceptrice de signaux lumineux (79),
le système d'irradiation par laser (13) est conçu pour entraîner ledit moteur (71) sur la base d'un signal de photodétection provenant de ladite unité réceptrice de signaux lumineux (79) et pour modifier une direction d'irradiation du premier faisceau laser (60) en entraînant et contrôlant le moteur rotatif de tête (71).

2. Système d'irradiation par laser (13) selon la revendication 1,
dans lequel ladite unité de nivellement (14) est disposée sur une base (16) présentant des surfaces d'installation se croisant perpendiculairement, et ladite unité de nivellement (14) est montée sur l'une desdites surfaces d'installation de ladite base (16).

3. Système d'irradiation par laser (13) selon la revendication 1,
dans lequel ladite unité principale (15) est supportée de manière inclinable dans n'importe quelle direction, ladite unité principale (15) comprend une unité de détection d'inclinaison (47) pour détecter l'inclinaison dans deux directions horizontales, ladite unité de nivellement (14) comprend deux ensembles de sous-unités de nivellement (25, 26) capables d'incliner ladite unité principale (15) indépendamment dans deux directions, et lesdits deux ensembles de sous-unités de nivellement (25, 26) sont entraînés sur la base du résultat de détection par ladite unité de détection d'inclinaison (47).

4. Système d'irradiation par laser (13) selon la revendication 1,
dans lequel ladite unité principale (15) est supportée de manière inclinable dans n'importe quelle direction selon besoin par un roulement à rotule, ladite unité principale (15) comprend une unité de détection d'inclinaison (47) pour détecter l'inclinaison dans trois directions se croisant perpendiculairement, ladite unité de nivellement (14) comprend deux ensembles de sous-unités de nivellement (25, 26) capables d'incliner ladite unité principale indépendamment dans deux directions et une unité de compensation de roulis (27) pour faire tourner ladite unité principale (15) autour dudit roulement à rotule, et lesdits deux ensembles de sous-unités de nivellement et ladite unité de compensation de roulis (27) sont entraînées sur la base du résultat de détection par ladite unité de détection d'inclinaison (47).

5. Système d'irradiation par laser (13) selon la revendication 1,
dans lequel ledit système optique d'irradiation comprend un prisme pentagonal (103) disposé sur le centre de rotation de ladite unité rotative (67), et le faisceau laser (60) dévié par ledit prisme pentagonal (103) est projeté aux fins de balayage et un plan de référence est formé lorsque ladite unité rotative (67) est tournée.

6. Système d'irradiation par laser (13) selon la revendication 1,
dans lequel ladite unité principale (15) comprend une troisième unité émettrice de lumière (92) ayant un axe optique incliné par rapport à ladite deuxième unité émettrice de lumière (74), et ladite troisième unité émettrice de lumière (92) irradie un troisième faisceau laser (96) en forme d'éventail, dans lequel le troisième faisceau laser (96) présente un étalement dans la même direction que ledit deuxième faisceau laser (70) et est irradié dans le même plan que ledit deuxième faisceau laser (70).

7. Système d'irradiation par laser (13) selon la revendication 1,
dans lequel un axe optique de ladite deuxième unité émettrice de lumière (74) est incliné par rapport au premier plan de référence formé par ledit premier faisceau laser (60).

8. Système d'irradiation par laser (13) selon la revendication 1,
dans lequel la couleur de ladite première unité émettrice de lumière est différente de la couleur dudit deuxième faisceau laser (70).

9. Système d'irradiation par laser (13) selon la revendication 1,
dans lequel ladite deuxième unité émettrice de lumière (74) irradie ledit deuxième faisceau laser (70) en forme d'éventail par le biais de ladite seconde lentille barreau (77).

10. Système d'irradiation par laser (13) selon la revendication 6,
dans lequel ladite troisième unité émettrice de lumière (92) irradie ledit troisième faisceau laser (96) en forme d'éventail par le biais d'une lentille barreau (95).

11. Système d'irradiation par laser (13) selon la revendication 1,
dans lequel ladite unité principale (15) possède un corps tubulaire (46) pour loger ladite première unité émettrice de lumière, et ladite unité rotative (67) est montée de manière rotative sur ledit corps tubulaire (46).
